Europäisches Patentamt

**European Patent Office**

**Office européen des brevets**

(11) Publication number: **0 209 278**
A1

# EUROPEAN PATENT APPLICATION

(21) Application number: 86304990.4

(22) Date of filing: 26.06.86

(51) Int. Cl.⁴: **B 60 T 8/42,** B 60 T 8/26

(30) Priority: 13.07.85 GB 8517712

(43) Date of publication of application: 21.01.87
Bulletin 87/4

(84) Designated Contracting States: DE FR GB IT

(71) Applicant: LUCAS INDUSTRIES public limited company,
Great King Street, Birmingham, B19 2XF West Midlands
(GB)

(72) Inventor: Mortimer, Ivan, 4 Old Warwick Court Old
Warwick Road, Olton Solihull West Midlands B92 7JT
(GB)

(74) Representative: Spall, Christopher John et al, BARKER,
BRETTELL & DUNCAN 138 Hagley Road, Edgbaston
Birmingham B16 9PW (GB)

(54) **Improvements in anti-skid hydraulic braking systems for vehicles.**

(57) A modulator assembly incorporates a valve (50, 51) for controlling communication between a master cylinder (2) and a wheel brake (1). When the brake is applied normally the valve (50, 51) acts as a pressure conscious reducing valve, and after a skid signal has been emitted, as a cut-off valve. The valve (50, 51) comprises a differential piston (52) working in stepped bore (53) and normally urged by a spring (54) towards a de-boost piston (10, 11) and the end of the bore which is of greater area, and a one-way valve (56, 57) incorporated in the piston is normally held open by a probe (59) associated with the de-boost piston. The one-way valve (56, 57) comprises a valve member (56) for co-operation with the seating to provide a metering effect when the brake is applied normally, and to isolate the master cylinder from the brake when a skid-signal is present.

ACTORUM AG

1

## IMPROVEMENTS IN ANTI-SKID HYDRAULIC BRAKING SYSTEMS FOR VEHICLES

This invention relates to anti-skid hydraulic braking systems for vehicles of the kind in which hydraulic fluid from a source of hydraulic fluid under pressure is supplied to a wheel brake of a vehicle through a modulator assembly which is adapted to modulate the supply of fluid from the source to the brake in response to skid signals from skid sensing means, the modulator assembly comprising a de-boost piston located in a bore in a housing, an expander chamber connected to the brake, a first valve disposed between the source and the expander chamber, and a second valve for controlling the application to the de-boost piston assembly of a fluid-sustained support force to determine the relative position of the de-boost piston in the bore, the second valve normally being so operative that the support force holds the de-boost piston assembly in an advanced position in which the effective volume of the expander chamber is at a minimum value, the first valve normally being open to provide communication between the source and the brake at least when the de-boost piston is in the said advanced position, and means responsive to a skid signal to manipulate the second valve in order to reduce the support force whereafter the de-boost piston can move away from the advanced position and into a retracted position in which the effective volume of the expander chamber is increased thereby reducing the pressure applied to the brake, the reduction in the support force also permitting the first valve to close.

According to our invention in an anti-skid braking system of the kind set forth the first valve acts as a pressure conscious reducing valve when the brake is applied normally, and as a cut-off valve after a skid signal has been emitted.

When the brake is applied normally the pressure applied to the brake increases up to a knee point at which the first valve closes and thereafter the pressure applied to the brake increases by the operation of the pressure conscious reducing valve, but at a rate of pressure increase less than the rate of pressure increase up to the knee point.

Preferably the fluid-sustained support force comprises a supply of fluid which acts on the piston through a flow-control regulator valve, which is operative to regulate the re-establishment of the fluid-sustained support force following termination of the skid signal.

Preferably the first valve comprises a differential piston working in a stepped bore and normally urged by a spring in a first direction towards the de-boost piston and the end of the bore which is of greater area, with a one-way valve incorporated in a through bore in the piston and normally held in an open position by means of a probe associated with the de-boost piston.

Conveniently the one-way valve comprises a valve member for co-operation with a seating in the bore in the piston to provide a metering effect when the brake is applied normally, and to isolate the source from the brake in a single braking cycle following correction of a skid and throughout that cycle.

3

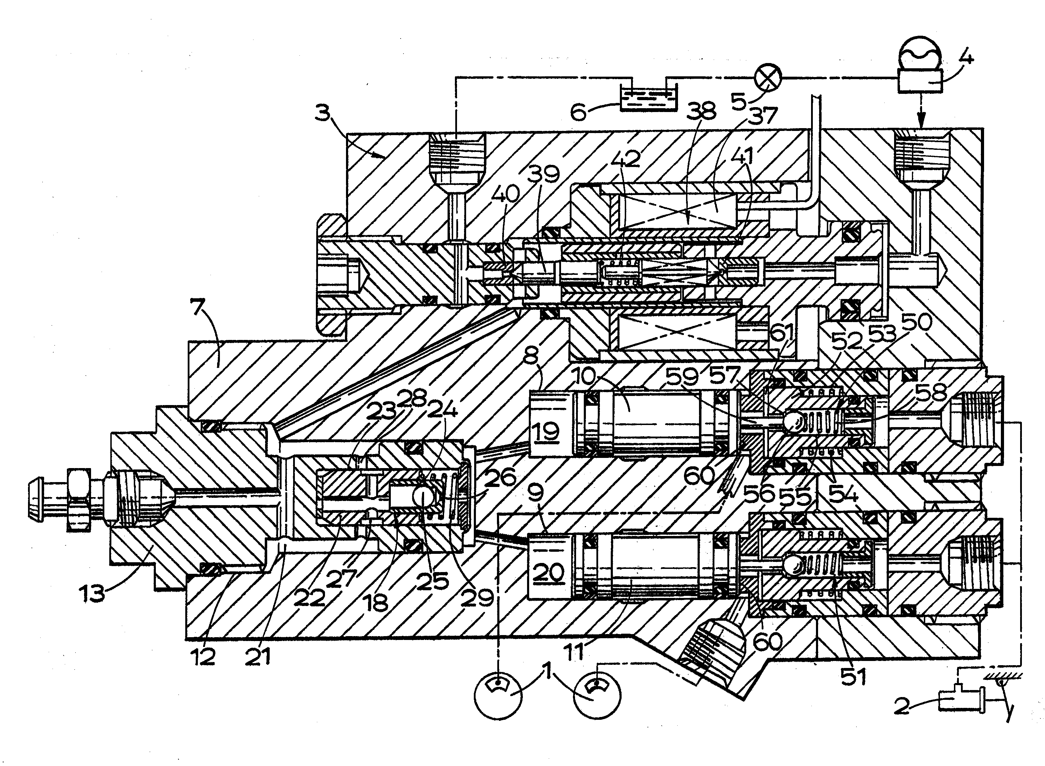

One embodiment of our invention is illustrated in the single Figure of the accompanying drawings which is a layout of an hydraulic anti-skid braking system including a longitudinal section through a modulator assembly.

In the braking system shown in the layout of the single Figure the brakes 1 on the rear wheels of a vehicle are each adapted to be applied by a master cylinder 2, and the supply from the master cylinder 2 to each brake is modulated by a modulator assembly 3. A fluid-sustained support force for the modulator assembly 3 is provided by an hydraulic accumulator 4 which is charged by a pump 5 which, in turn, draws hydraulic fluid from a reservoir 6.

The modulator assembly 3 comprises a housing 7 provided with a pair of parallel stepped bores 8, 9 in which work de-boost pistons 10 and 11, and the bores 8 and 9 communicate with a third central bore 12 which is closed at its outer end by means of a plug 13.

A flow-control regulating valve 18 is incorporated in the housing 7 to regulate the flow of fluid in both directions between a pair of control chambers 19, 20 each defined in a respective bore 8, 9 at the outer adjacent end of each piston 10 and 11 and a fluid-sustaining chamber 21 on the opposite side of the regulating valve 18. The valve 18 comprises a spool 22 working in a bore 23 in the plug 13. The spool 22 is provided with a radial orifice 24 to provide communication through the spool 22 when a ball 25 acts to prevent flow through a passage 26 in the inner end of the spool 22. In addition a radial passage 27 in the spool 22 communicates with an annular passage 28 in the plug 13 to provide substantially unrestricted flow through the flow control valve 18 when the spool 22 is urged by a spring 29 into the open position shown.

A solenoid-operated valve 38 (second valve) having a solenoid 37 responsive to signals from a wheel speed sensor (not shown) controls operation of a valve member 39 which is alternatively engageable with spaced valve seatings 40, 41, and the valve member 39 is readily movable since it is at all times totally immersed in hydraulic fluid. The valve 38 is operative to control the supply of fluid from the accumulator 4 to the chamber 21, and between the chamber 21 and the reservoir 6.

A combined pressure-reducing and cut-off valve 50, 51 associated with each respective modulator piston 10, 11 is disposed in the housing between the master cylinder 2 and each respective brake 1. Since both valves 50, 51 are identical in construction, only one will be described.

The valve 50 comprises a stepped piston 52 working in a stepped bore 53 and normally urged towards the end of greater area, which leads to the brake 1, by means of a compression spring 54. The piston 52 has a stepped through-bore 55 providing communication between the master cylinder 2 and the brake 1. Flow through the through-bore 55 is controlled by a valve member in the form of a ball 56 which is urged towards a seating 57 at a step at the change in diameter by means of a spring 58, and the ball 56 is adapted to be held away from seating 57 by means of a probe 59 with which the modulator piston 10 co-operates.

In the inoperative position shown in the drawing no skid signal is present and the valve member 39 is biassed by a spring 42 into engagement with the seating 40 to isolate the chamber 21 from the reservoir 6. Hydraulic fluid from the accumulator 4 is supplied to the chamber 21 and a volume of fluid in each control chamber 19, 20 holds the respective modulator pistons 10 and 11 in advanced positions in engagement with abutments 60 at the adjacent, outer ends, of the bores 8, 9. The chamber 21 and the control chambers 19, 20 are connected by means of the flow control regulating valve 18. The spring 29 initially holds the spool 22 in its position of maximum flow. In this position the pistons 10 hold the balls 56 away from the seatings 57 so that the master cylinder 2 is in open communication through the first valves 50 and 51 to apply the brakes 1.

When the brakes 1 are applied normally, fluid under pressure from the master cylinder 2 is supplied to both brakes through the valves 50 and 51, and past the balls 56 which are spaced from their seatings 57 as described above. Equal pressures are therefore applied to opposite ends of the pistons 52. At a knee point when the resultant force acting on each piston 52 and equal to the pressure acting over an area equal to the difference in areas between opposite ends of the piston, is sufficient to overcome the force in the spring 54, the piston 52 moves towards the end of the bore 53 which is of smaller area and the seating 57 engages with the ball 56 to isolate the master cylinder 2 from the brake 1. Thereafter, as the pressure from the master cylinder 2 acting on the end of the piston 52 which is of smaller diameter increases, the piston 52 is moved in the opposite direction with the seating 57 moving relatively away from the ball 56 of which any movement with the seating 57 is arrested by the probe 59. Unrestricted flow takes place through the piston 52 as described above until the net force acting on the piston 52 builds up again to a value sufficient to overcome the force in the spring 54 whereafter the ball 56 re-engages with the seating 57.

The valves 50 and 51 act as pressure conscious reducing valves to meter the supply of fluid to the brakes 1 after the knee point has been reached. The effect of this is that the pressure applied to the brakes 1 after the knee point has been reached increases but at a rate of pressure increase less than that at which the pressure increased up to the knee point.

Since the pressure applied to the brakes on the front wheels of the vehicle is normally increased through a braking cycle, at a rate similar to that applied to those on the rear wheels up to the knee point, the action of the valves 50 and 51 as pressure conscious reducing valves ensures that, after the knee point has been reached, the pressure applied to the rear wheels increases, but at a rate of pressure increase less than that at which the pressure applied to the brakes on the front wheels increases. For a given master cylinder pressure the rear wheels are therefore less likely to lock or attain a critical rate of deceleration.

When a skid signal is produced by the skid sensor, irrespective of whether the knee point has been reached, the solenoid valve 38 is operated by energisation of its solenoid 37 against the load in the spring 42 to cause the valve member 39 to move away from the seating 40 and into engagement with its seating 41. This cuts off communication between the accumulator 4 and the chamber 21, and dumps the fluid in the chamber 21 to the reservoir 6. The force sustaining the pistons 10 and 11 in the advanced positions is therefore removed by dumping the fluid in the chambers 19 and 20 to the reservoir 6 through the flow-control regulating valve 18, which is open fully due to the pressure drop across the spool 22. The pistons 10 and 11 therefore move in unison into retracted positions accompanied by corresponding movement of the probes 59 away from the balls 56. Initial movement of the pistons 10 and 11 in this direction permits the balls 56 to engage with the seatings 57 and isolate the master cylinder 2 from the brakes 1, and subsequent movement of the pistons 10 and 11 in the same direction increases the effective volume of expander chambers 61 defined in the bores 8, 9 between the pistons 10 and 11 and the balls 56 to relieve the pressure applied to the brakes 1, and thereby release the brakes. Clearly the greater the period of time the brake 1 is released to correct the skid, the greater will be the relative distance through which the pistons 10 and 11 move to relieve the pressure applied to the brakes 1.

At the termination of the skid signal the solenoid of the solenoid valve 38 is de-energised and the spring 42 is again operative to bias the member 39 into re-engagement with the seating 40. Fluid under pressure from the accumulator 4 is again supplied to the chamber 21, and the chambers 19 and 20 via the flow-control valve 18, and this pressure causes the pistons 10 and 11 to move towards their advanced positions.

The movement of the pistons 10 and 11 towards their advanced positions reduces the effective volume

8

of the expander chambers 61, in turn to re-apply the brakes 1 at a controlled rate which is governed by the flow-control valve 18.

Assuming no further skid signal is received during the braking cycle, the pistons 10 and 11 will be returned, at a controlled rate, to their advanced positions in which the volumes of the expander chambers 61 are at minimums.

Of course, should a second skid signal be received during a common braking cycle, then the sequence described above will be repeated with the direction of movement of the pistons 10 and 11 reversed to affect release of the brakes 1.

The balls 56 will remain in engagement with the seatings 57 throughout the total brake re-application stages, and will move away from the seatings 57 again only following release of the pedal of the master cylinder 2.

CLAIMS

An anti-skid hydraulic braking system for vehicles in which hydraulic fluid from a source (2) of hydraulic fluid under pressure is supplied to a wheel brake (1) of a vehicle through a modulator assembly (3) which is adapted to modulate the supply of fluid from the source to the brake in response to skid signals from skid sensing means, the modulator assembly comprising a de-boost piston (10) located in a bore (8) in a housing (7), an expander chamber (61) connected to the brake, a first valve (50) disposed between the source and the expander chamber, and a second valve (38) for controlling the application to the de-boost piston assembly of a fluid-sustained support force to determine the relative position of the de-boost piston in the bore, the second valve normally being so operative that the support force holds the de-boost piston assembly in an advanced position in which the effective volume of the expander chamber is at a minimum value, the first valve normally being open to provide communication between the source and the brake at least when the de-boost piston is in the said advanced position, and means (37) responsive to a skid signal to manipulate the second valve in order to reduce the support force whereafter the de-boost piston can move away from the advanced position and into a retracted position in which the effective volume of the expander chamber is increased thereby reducing the pressure applied to the brake, the reduction in the support force also permitting the first valve to close characterised in that the first valve(50) acts as a pressure conscious reducing valve when the brake is applied normally, and as a cut-off valve after a skid signal has been emitted.

2. A braking system according to claim 1, in which the modulator assembly (3) incorporates at least two de-boost pistons (10, 11) located in separate bores (8, 9) in the housing (7), a separate expander chamber (61) is connected to each respective brake, and a separate first valve (50) is disposed between the source (2) and each respective expander chamber (61), characterised in that each first valve (50) acts as a pressure conscious reducing valve when the respective brake (1) is applied normally, and as a cut-off valve after a skid signal has been emitted.

3. A braking system according to claim 1 or claim 2 characterised in that the or each first valve (50) is so constructed and arranged that when the brake is applied normally the pressure applied to the brake increases up to a knee point at which the first valve (50) closes and thereafter the pressure applied to the brake increases by the operation of the pressure conscious reducing valve, but at a rate of pressure increase less than the rate of pressure increase up to the knee point.

4. A braking system according to any preceding claim, characterised in that the fluid-sustained support force comprises a supply of fluid (4) which acts on the or each piston (10) through a flow-control regulator valve (18), which is operative to regulate the re-establishment of the fluid-sustained support force following termination of the skid signal.

5. A braking system according to any preceding claim, characterised in that the or each first valve (50) comprises a differential piston (52) working in a stepped bore (53) and normally urged by a spring (54) in a first direction towards the de-boost piston (10)

11

and the end of the bore which is of greater area, with a one-way valve (56, 57) incorporated in a through bore (55) in the piston and normally held in an open position by means of a probe (59) associated with the de-boost piston.

6. A braking system according to claim 5, characterised in that the one-way valve comprises a valve member (56) for co-operation with a seating (57) in the bore (55) in the piston to provide a metering effect when the brake is applied normally, and to isolate the source (2) from the brake in a single braking cycle following correction of a skid and throughout that cycle.

0209278

1/1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 022 739  (NISSAN)<br>* Page 2, line 127 - page 3, line 67; figures * | 1 | B 60 T    8/42<br>B 60 T    8/26 |
| A | DE-A-2 459 775  (TELDIX)<br>*  Page 7, line 28 - page 8, line 31; figure 2 * | 2 | |
| A | WO-A-8 001 783  (LUCAS)<br>* Whole document * | 4 | |
| A | DE-A-3 301 903  (TEVES)<br>* Whole document * | 5 | |
| A | GB-A-2 065 251  (AUTOM. PRODUCTS) | | |
| A | DE-A-2 924 484  (TEVES) | | TECHNICAL FIELDS SEARCHED (Int. Cl.4)<br><br>B 60 T |
| P,X | EP-A-0 149 523  (LUCAS)<br>* Whole document * | 1,3-6 | |

The present search report has been drawn up for all claims

| Place of search | Date of completion of the search | Examiner |
|---|---|---|
| THE HAGUE | 07-10-1986 | BLURTON M.D |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503 03 82